# EUROPEAN PATENT APPLICATION

(11) **EP 4 360 784 A1**
(43) Date of publication of application: **01.05.2024**
(21) Application number: 23190013.5
(22) Date of filing: 07.08.2023
(51) Int. Cl.: B23B 51/00

(54) **STEP DRILL BIT**

(30) Priority: 10.08.2022 US 202263371005 P; 04.08.2023 US 202318365428
(71) Applicant: Black & Decker, Inc., New Britain, CT 06053 (US)
(72) Inventor: BAILEY, Erick Taylor, Vernon, 06066 (US); BARRO, Clederson, 95185-000 Carlos Barbosa (BR); DOS SANTOS, Yuri Marques, 95720-000 Garibaldi (BR); GREEN, Matthew Christopher, Amherst, 01002 (US); BRANDIN, Jackson Mead, West Springfield, 01089 (US); REIST, Andrew C., Springfield, 01128 (US); NOVAK, Joseph T., East Longmeadow, 01028 (US)
(74) Representative: SBD IPAdmin

(57) **Abstract**

A step drill bit includes a cutting head portion with a rear end coupled to a shank portion. The cutting head portion incudes a front cutting tip, a plurality of steps of progressively increasing diameter from the cutting head to the rear end portion. Each step includes a conical tapered portion that flares radially outward from the axis and a generally cylindrical portion that extends axially rearward from the tapered portion. A flute extends through the steps generally parallel to or helically relative to the axis. Primary and secondary cutting edges are formed at junctions between the tapered portions and the generally cylindrical portions and the flute. A depth stop flange extends radially outward from a rearmost step and has a diameter greater than the diameter of the cylindrical portion of the rearmost step. A deburring recess is disposed within or between one of the steps and includes a deburring edge at a junction between the deburring recess and the flute to remove burrs from an edge of a hole.

## Description

### RELATED APPLICATION

This application claims priority, under 35 U.S.C. § 119(e), to U.S. Provisional Patent Application No. 63/371,005, filed August 10, 2022, titled "Step Drill Bit," which is incorporated by reference.

### TECHNICAL FIELD

This application relates to step drill bits for use with powered drills.

### BACKGROUND

A step drill bit typically comprises a series of graduated steps that permit the drilling of multiple different sized holes without changing the bit. Step drill bits are designed for use with power drills and may be used on all materials but are typically designed for use with metal. Examples of step drill bits can be found in U.S. Patent Nos. 6,890,133 and 9,687,915, each of which is incorporated by reference.

### SUMMARY

In an aspect, a step drill bit includes a shank portion configured to be coupled to a power tool and extending along an axis and a cutting head portion extending along the axis. The cutting head includes a rear end coupled to the shank portion, a front cutting tip, and a plurality of steps of progressively increasing diameter from the cutting head to the rear end portion. Each step includes a conical tapered portion that flares radially outward from the axis at a first outward angle relative to the axis and a generally cylindrical portion that extends axially rearward from the tapered portion. The steps are configured to form a plurality of different diameter holes in a workpiece, and a flute that extends through the series of steps generally parallel to or helically relative to the axis. Primary cutting edges are formed at junctions between each tapered portion and the flute. Secondary cutting edges are formed at junctions between each generally cylindrical portion and the flute. A depth stop flange extends radially outward from a rearmost step of the plurality of steps. The flange has a diameter greater than the diameter of the cylindrical portion of the rearmost step. A deburring recess is disposed within or between one of the steps. The deburring recess includes a deburring edge at junction between the deburring recess and the flute configured to remove burrs from an edge of a hole that has been formed by the plurality of steps.

Implementations of this aspect may include one or more of the following features. The rearmost step may include an inwardly tapered portion that is inwardly tapered from the cylindrical portion of the rearmost portion at a first inward angle relative to the axis. The first inward angle may be approximately 5 degrees to 15 degrees. The rearmost step may have an axial length that is greater than an axial length of each of the other plurality of steps. The cylindrical portions of the other plurality of steps may be tapered inward at a second inward angle relative to the axis that is less than the first inward angle. The second inward angle may be approximately 0.1 to 3 degrees. The depth stop flange may include a conical tapered portion that flares radially outward from the axis at a second outward angle relative to the axis, the second outward angle being smaller than the first outward angle. The first outward angle is approximately 135 to 155 degrees and the second outward angle is approximately 110 to 130 degrees to inhibit cutting and marring of a workpiece by the depth stop flange. The deburring recess may be C-shaped or V-shaped. The deburring edge may include a forwardmost top portion that is configured to remove the burrs from the edge of the hole. The deburring recess may be within the cylindrical portion of one of the steps. The one of the steps with the deburring recess may have an axial length that is greater than an axial length of each of the other plurality of steps.

In another aspect, a step drill bit includes a shank portion configured to be coupled to a power tool and extending along an axis and a cutting head portion extending along the axis. The cutting head portion includes a rear end coupled to the shank portion, a front cutting tip, a plurality of steps of progressively increasing diameter from the cutting head to the rear end portion. Each step includes a conical tapered portion that flares radially outward from the axis at a first outward angle relative to the axis and a generally cylindrical portion that extends axially rearward from the tapered portion. The steps are configured to form a plurality of different diameter holes in a workpiece. A flute extends through the series of steps generally parallel to or helically relative to the axis. Primary cutting edges are formed at junctions between each tapered portion and the flute. Secondary cutting edges are formed at junctions between each generally cylindrical portion and the flute. A depth stop flange extends radially outward from a rearmost step of the plurality of steps. The flange has a diameter greater than the diameter of the cylindrical portion of the rearmost step. The rearmost step includes an inwardly tapered portion is inwardly tapered from the cylindrical portion of the rearmost portion at a first angle relative to the axis.

Implementations of this aspect may include one or more of the following features. The rearmost step may have an axial length that is greater than an axial length of each of the other plurality of steps. The cylindrical portions of the other plurality of steps may be tapered inward at a second angle relative to the axis that is less than the first angle. The first angle may be approximately 5 degrees to 15 degrees and the second angle may be approximately 0.1 to 3 degrees. A deburring recess may be disposed within or between one of the step. The deburring recess may include a deburring edge at junction between the deburring recess and the flute configured to remove burrs from an edge of a hole that has been formed by the plurality of steps.

In another aspect, a step drill bit includes a shank portion configured to be coupled to a power tool and extending along an axis and a cutting head portion extending along the axis. The cutting head portion includes a rear end coupled to the shank portion, a front cutting tip, a plurality of steps of progressively increasing diameter from the cutting head to the rear end portion. Each step includes a conical tapered portion that flares radially outward from the axis at a first outward angle relative to the axis and a generally cylindrical portion that extends axially rearward from the tapered portion. The steps are configured to form a plurality of different diameter holes in a workpiece. A flute extends through the series of steps generally parallel to or helically relative to the axis. Primary cutting edges are formed at junctions between each tapered portion and the flute. Secondary cutting edges are formed at junctions between each generally cylindrical portion and the flute. A depth stop flange extends radially outward from a rearmost step of the plurality of steps. The flange having a diameter greater than the diameter of the cylindrical portion of the rearmost step. The depth stop flange includes a conical tapered portion that flares radially outward from the axis at a second outward angle relative to the axis, the second outward angle being smaller than the first outward angle.

Implementations of this aspect may include one or more of the following features. The first outward angle may be approximately 135 to 155 degrees and the second outward angle may be approximately 110 to 130 degrees to inhibit cutting and marring of a workpiece by the depth stop flange. A deburring recess may be disposed within or between one of the steps, the deburring recess including a deburring edge at junction between the deburring recess and the flute configured to remove burrs from an edge of a hole that has been formed by the plurality of steps.

In another aspect, a step drill bit includes a shank portion configured to be coupled to a power tool and extending along an axis and a cutting head portion extending along the axis. The cutting head portion includes a rear end coupled to the shank portion, a front cutting tip, a plurality of steps of progressively increasing diameter from the cutting head to the rear end portion, each step including a conical tapered portion that flares radially outward from the axis at an acute angle relative to the axis and a generally cylindrical portion that extends axially rearward from the tapered portion, the steps configured to form a plurality of different diameter holes in a workpiece, a flute that extends through the series of steps generally parallel to or helically relative to the axis, primary cutting edges formed at junctions between each tapered portion and the flute, secondary cutting edges formed at junctions between each generally cylindrical portion and the flute, and a deburring recess disposed within or between one of the steps, the deburring recess including a deburring edge at junction between the deburring recess and the flute, the deburring edge including a forwardmost top portion that is configured to remove the burrs from the edge of a hole that has been formed by the plurality of steps.

Implementations of this aspect may include one or more of the following features. The deburring recess may be C-shaped or V-shaped. The deburring recess may be within the cylindrical portion of one of the steps. The rearmost step may include an inwardly tapered portion is inwardly tapered from the cylindrical portion of the rearmost portion at a first angle relative to the axis. A depth stop flange may extend radially outward from a rearmost step of the plurality of steps, the flange having a diameter greater than the diameter of the cylindrical portion of the rearmost step. The cylindrical portions of the other plurality of steps may be tapered inward at a second angle relative to the axis that is less than the first angle.

In another aspect, a step drill bit includes a shank portion for being coupled to a powered drill and a cutting head portion with a front cutting tip and a rear end coupled to the shank portion, the shank and cutting head each extending along a central axis. The cutting head portion includes a series of graduated steps of progressively increasing diameter from the cutting head to the rear end portion that permit the drilling of multiple different sized holes without changing the bit. Each step includes a generally conical tapered portion that flares radially outward at an acute angle to the axis and a generally cylindrical portion that extends axially rearward from the tapered portion. The cutting head portion also includes one or move flutes that may extend axially or helically relative to the central axis. A cutting edge is formed at a junction between each step and the flute, with most of the cutting being performed by the tapered section. The cutting head portion includes a depth stop in the form of a radial flange extending radially outward from the rearmost step, the flange having a diameter greater than the diameter of the rearmost step. The cutting head portion further includes at least one deburring recess disposed between or within one of the steps, the deburring recess configured usable to remove burrs from a hole that has been drilled.

Implementations of this aspect may include one or more of the following features. One or more of the cylindrical portions may be tapered inward toward the axis from its front end to its rear end by a small angle (e.g., 1 to 3 degrees). The steps may each have the same or different axial lengths. The rearmost step may have a greater length than all of the other steps and may have a rear portion that tapers inward toward the depth stop at a larger angle (e.g., 5 to 15 degrees) relative to the central axis. The flute may have a J-shaped cross section with a flat portion and curved portion that intersects the steps. The deburring recess may have a wall with a C-shaped cross-section that extends at least partially around the periphery of the cutting head portion. A sharp deburring edge may be formed at a junction between the wall and the flute. An outer portion of the deburring edge may extend radially outward from a line defining the radial outermost portion of the flute and may be used remove burrs from the hole. The deburring recess may be disposed within a cylindrical portion of one the steps or between steps. At least one step axially rearward of the cylindrical portion with the deburring recess has a shorter height than the steps axially forward of that cylindrical portion. The depth stop may be configured to reduce marring of a workpiece.

Advantages may include one or more of the following. The step drill bit may allow for removing burrs from holes formed by the step drill bit while reducing the risk of enlarging the hole. The depth stop on the step drill bit also may reduce the risk of the step drill bit breaking through or marring the workpiece, and may protect items behind a metal workpiece (such as electrical components in an electrical cabinet) from damage upon breakthrough. These and other advantages and features will be apparent from this application.

### BRIEF DESCRIPTION OF THE DRAWINGS

FIG. 1 is a perspective view of an embodiment of a step drill bit.
FIG. 2 is a side view of the step drill bit of FIG. 1.
FIG. 3 is a rear end view of the step drill bit of FIG. 1.
FIG. 4 is a front end view of the step drill bit of FIG. 1.
FIG. 5 is a close-up side view of the step drill bit of FIG. 1, showing the depth stop.
FIG. 6 is a close-up side view of the step drill bit of FIG. 1, showing the deburring recess.
FIGS. 7A-7E are perspective views of the step drill bit of FIG. 1 in operation being used to remove burrs from a hole formed by the step drill bit.
FIG. 8 is a perspective view of another embodiment of a step drill bit.
FIG. 9 is a side view of the step drill bit of FIG. 8.
FIG. 10 is a rear end view of the step drill bit of FIG. 8.
FIG. 11 is a front end view of the step drill bit of FIG. 8.
FIG. 12 is a close-up side view of the step drill bit of FIG. 8, showing the depth stop.
FIG. 13 is a close-up side view of the step drill bit of FIG. 8, showing the deburring recess.

### DETAILED DESCRIPTION

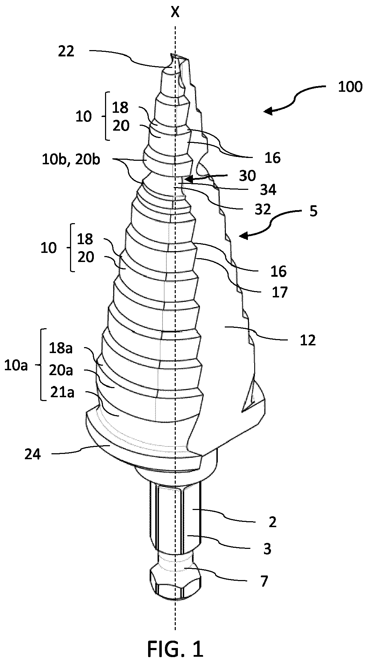

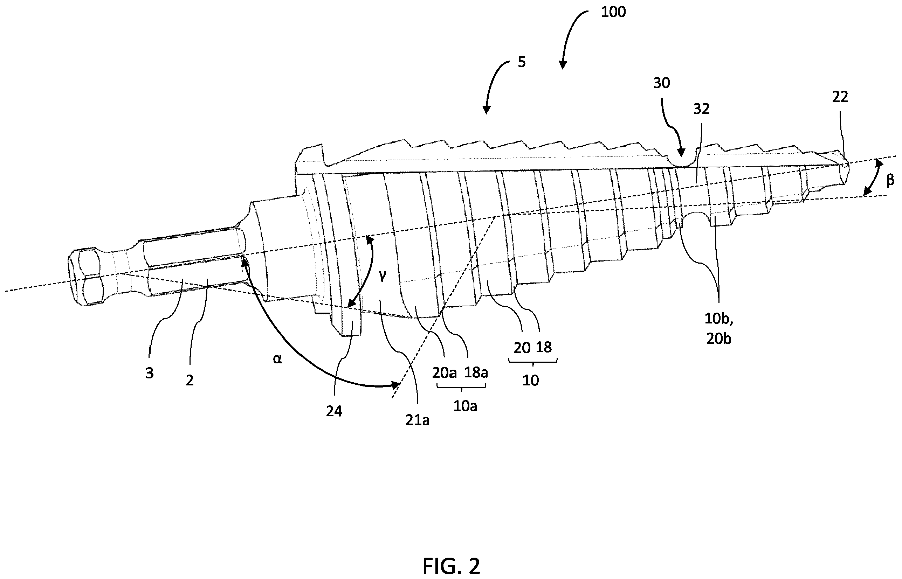

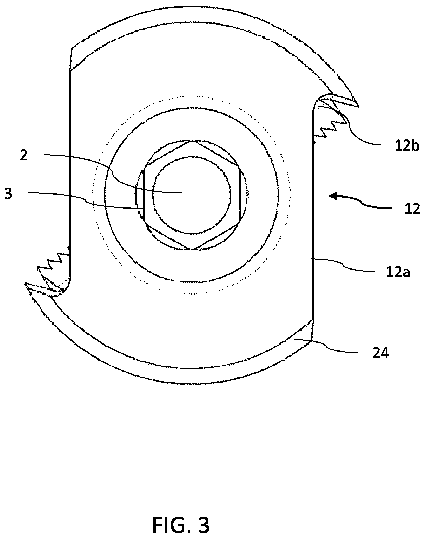

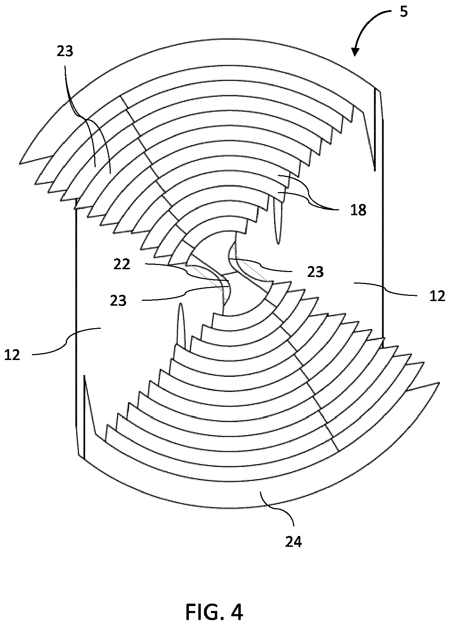

Referring to FIGS. 1-6, an embodiment of a step drill bit 100 includes a shaft or shank 2 that is configured to be connected to a tool holder (e.g., a chuck or quick release tool bit holder) of a rotary power tool, such as a drill, a drill/driver, or an impact driver. The shank 2 may include one or more flat faces 3 that may be received in the tool holder of the rotary power tool. In some embodiments the tool holder of the rotary power tool includes movable jaws that engage the flat faces 3 of the shank 2 such that the step drill bit 100 rotates upon actuation of the rotary power tool. In some embodiments, the shank 2 may comprise a quick connect coupler such as an annular groove 7 that receives a mating protrusion or ball in a quick connect tool holder of a rotary power tool. Other connectors may be provided for connecting the bit to a rotary tool.

A front end of the shank 2 is coupled to a rear end of a cutting portion 5 comprising a step drill configuration. The shank 2 and cutting portion 5 extend generally along a central axis X. In some embodiments, the shank 2 and cutting portion 5 may be formed as one-piece and out of the same material. In other embodiments, the shank 2 and cutting portion 5, or portions of the cutting portion 5 such as the cutting edges and/or cutting tip, may be formed of separate elements, and may be made of different materials connected together to form the bit. The materials may be selected to have different properties where, for example, the cutting portion 5, or portions of the cutting portion 5 such as the cutting edges and/or cutting tip, may be formed of a harder material than the remainder of the bit. The different portions of the bit may be secured together to make a bit where the different portions of the bit are integrally connected together such as by using welding, brazing or the like to permanently secure the components together. In other embodiments, different portions of the bit (such as a cutting edge) may be removably secured such that the different portions of the bit may be disconnected from one another and removed and replaced during normal use of the bit.

In the illustrated embodiment, the cutting portion 5 is formed with a cutting tip 22 and a plurality of steps 10 of progressively increasing diameter from the cutting tip 22 toward the shank 2 (e.g., the drill bit is shown with 12 steps although a greater or fewer number of steps may be used). The cutting tip 22 has a pair of radially extending primary cutting edges 23 that are used to start a hole in a workpiece. The cutting portion 5 also includes one or more flutes 12. Each flute 12 has a J-shape cross-section with a flat portion 12a and a concave curved portion 12b. In other embodiments, the flute may have a parabolic or other concave shape.

Each step 10 includes a generally conical tapered portion 18 that flares radially outward at an acute angle α to the axis C and a generally cylindrical portion 20 that extends axially rearward from the tapered portion. Each tapered portions may have the same acute angle α relative to the axis X, or the angle of the tapered portions may vary. The cylindrical portions have outer walls that are generally parallel to the axis X, but which may have a small inward taper at an angle β to the central axis X, e.g., 1 to 3 degrees. Cutting edges 16 and 17 are formed at junctions between the flute 12 and each tapered portion 18 and each cylindrical portion 20, respectively. Most of the cutting is performed by the cutting edge 16 on the tapered portion 18, although some cutting may also be performed by the cutting edge 17 on the cylindrical portion 20. In use, as the tapered portion 18 of each step 10 enters the workpiece, a progressively larger hole is formed in the workpiece. The steps may have the same or similar axial lengths or may have different axial lengths.

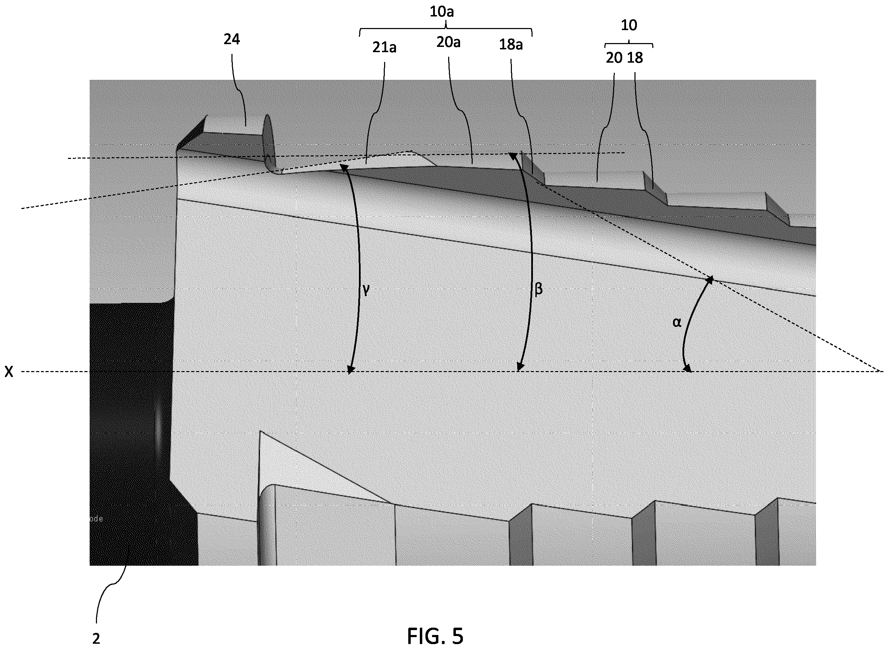

Referring also to FIG. 5, the cutting head portion 5 further includes a depth stop in the form of a radial flange 24 extending radially outward from the rearmost step 10a, adjacent the shank 2. The depth stop flange 24 has a diameter greater than the diameter of the rearmost step 10a and acts as a hard stop to prevent the step drill bit 100 from breaking through the workpiece when a hole of the largest diameter is formed. The depth stop flange 24 also may be configured to reduce marring of a workpiece.

The rearmost step 10a includes a tapered portion 18a (similar to the other tapered portions 18), a generally cylindrical portion 20a (similar to the other generally cylindrical portions 20) rearward of the tapered portion 18a, and an inwardly tapered portion 21a that is rearward of the generally cylindrical portion 20a and that tapers inward toward the shank portion 2 from the generally cylindrical portion 20a. The inwardly tapered portion 21a is tapered inward at an angle γ (e.g., 5 to 15 degrees) that is greater than any taper angle β (e.g., 1 to 3 degrees) on the cylindrical portions 20a. The rearmost step 10a also has an axial length that is greater than an axial length of all of the other steps 10. The inwardly tapered portion 21a inhibits the step drill bit from getting stuck in a hole and increases the life and durability of the step drill bit.

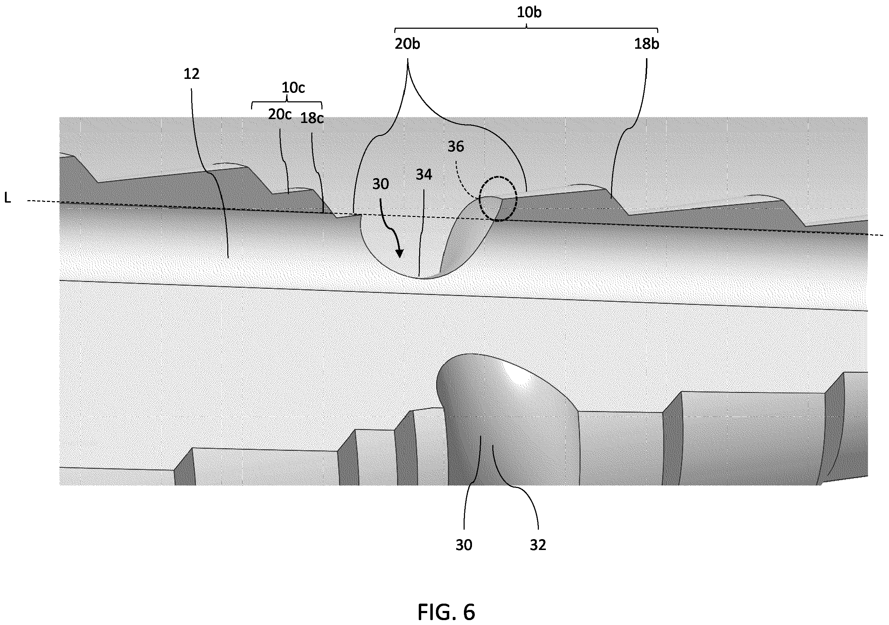

Referring also to FIGS. 6-7, the cutting head portion further includes at least one deburring recess 30 formed within the cylindrical portion 20b of one of the intermediate steps 10b. Alternatively, the deburring recess could be formed between adjacent steps 10 (e.g., between a cylindrical portion of one step and a tapered portion of the following step). The deburring recess 30 is configured to be usable to remove burrs from a hole that has been drilled by the step drill bit. The deburring recess 30 has a wall 32 with a C-shaped or V-shaped cross-section that extends at least partially around the periphery of the cutting head portion 5. A sharp deburring edge 34 is formed at a junction between the wall 32 and the J-shaped portion 12b of the flute 12 where they intersect. The deburring edge 34 includes an outer portion 36 that extends radially outward from a line L defining the radial outermost extent of the J-shaped portion 12b of the flute 12. The outer portion 36 of the deburring edge 34 is configured to be used to remove burrs from a hole drilled by the step drill bit while not increasing the diameter of the hole that has been drilled. The deburring recess 30 is advantageously formed on one of the smaller diameter steps 10 so that it can be used on most diameters of holes commonly formed using the step drill bit. Also, the step 10c immediately following the step 10b with the deburring recess 30 has a tapered portion 18c that is substantially similar to the tapered portions in the other steps but has a cylindrical portion 20c that substantially shorter in axial length than the axial lengths of the other cylindrical portions. This reduces the overall length of the step drill bit without adversely affecting performance.

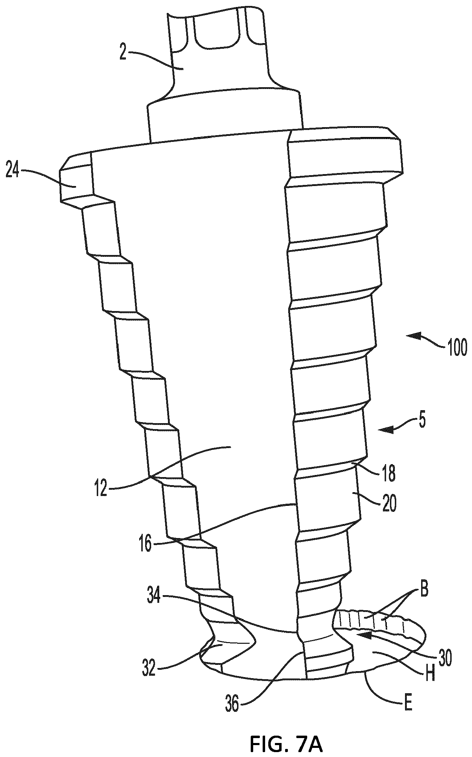

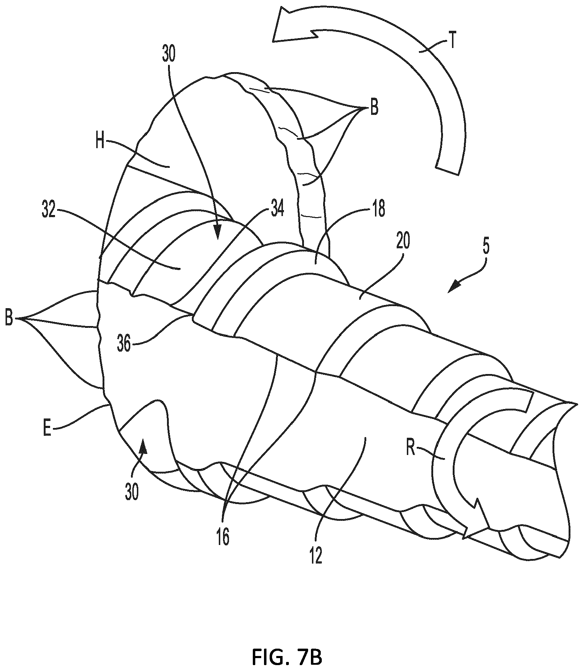

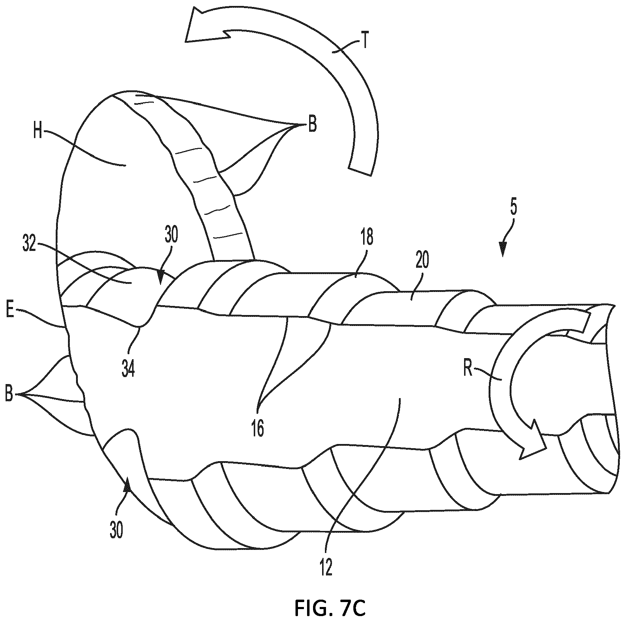

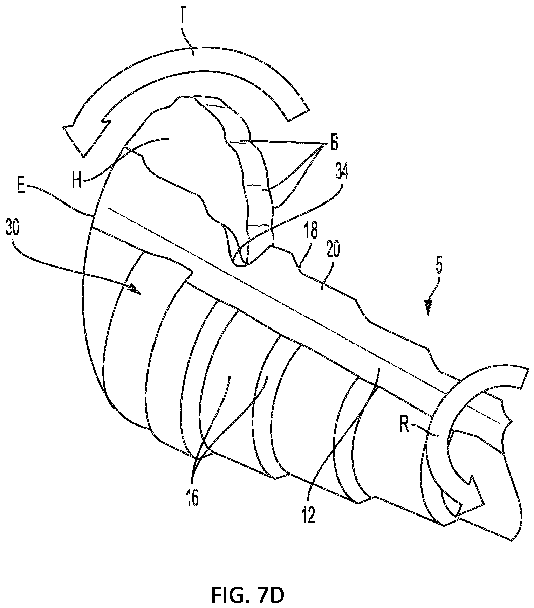

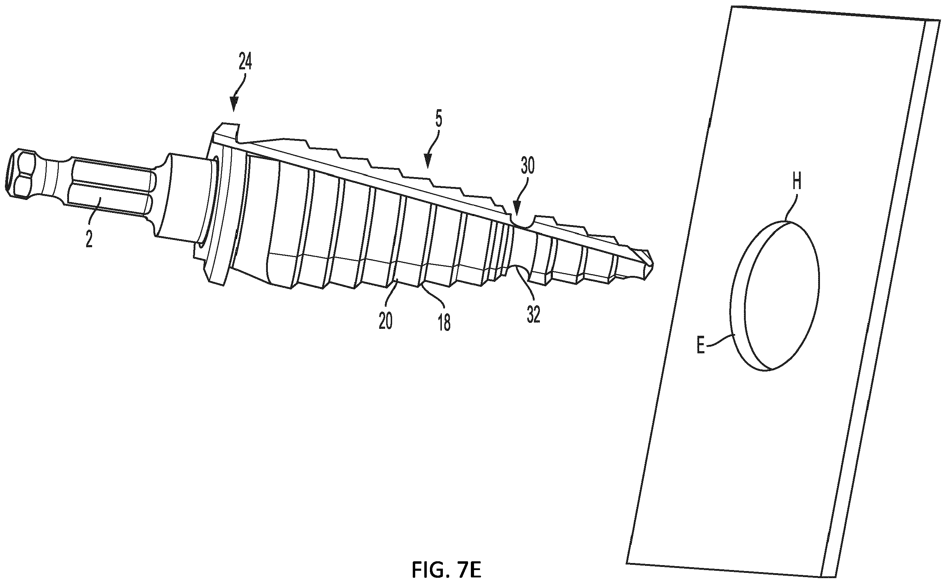

FIGS. 7A-7E illustrate the outer portion 36 of the deburring edge 34 being used to remove burrs B from a hole H that has been formed by the step drill bit 100. In each figure, the step drill bit 100 is rotated in the cutting direction (along arrow R). As shown in FIG. 7A, first the deburring recess 30 is aligned with the peripheral edge E of the hole H. As shown in FIGS. 7B-7D, the outer portion 36 of the deburring edge 34 engages the peripheral edge E. The power tool that is holding the step drill bit is activated to cause the step drill bit to rotate about its axis X in direction R. As the step drill bit is rotating in direction R about its axis, the user also moves the drill bit around the edge E by moving the drill bit in the direction of arrow T. The outer portion 36 of the deburring edge 34 cuts away the burrs B to create a smooth edge E. As shown in FIG. 7E, when complete the step drill bit is removed from the hole H, which is left with a smooth and deburred edge E.

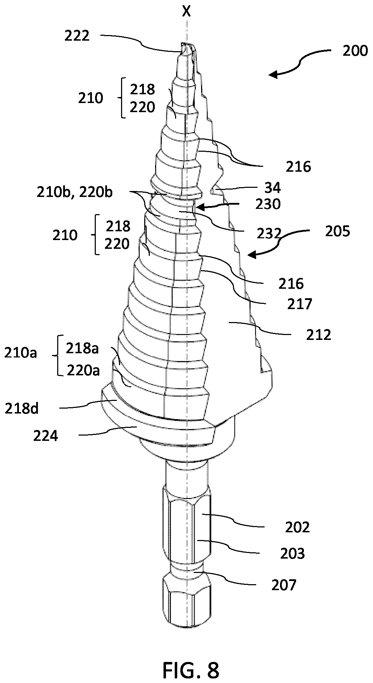

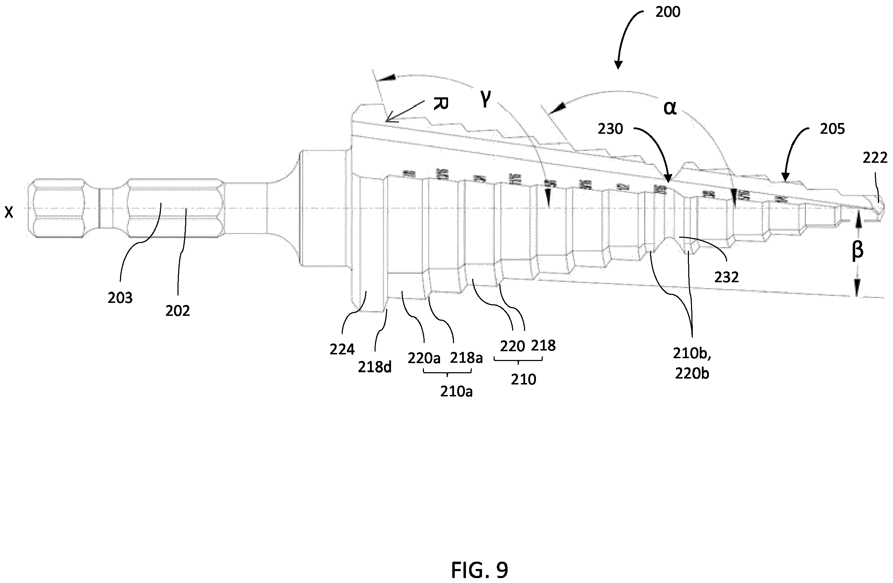

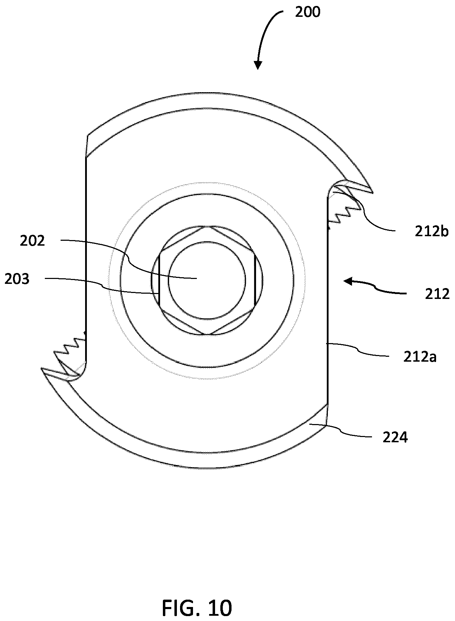

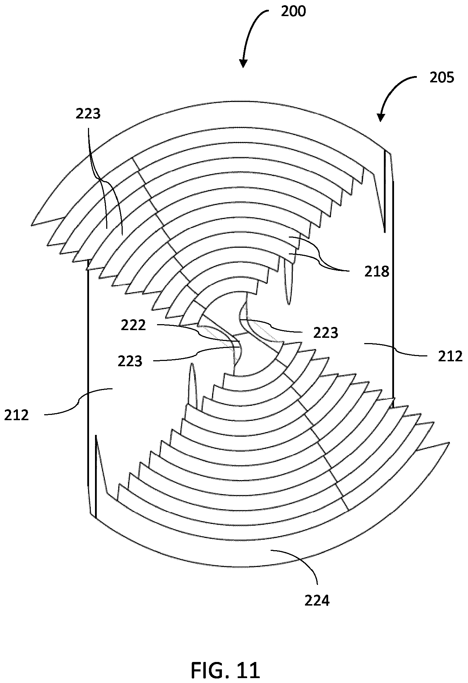

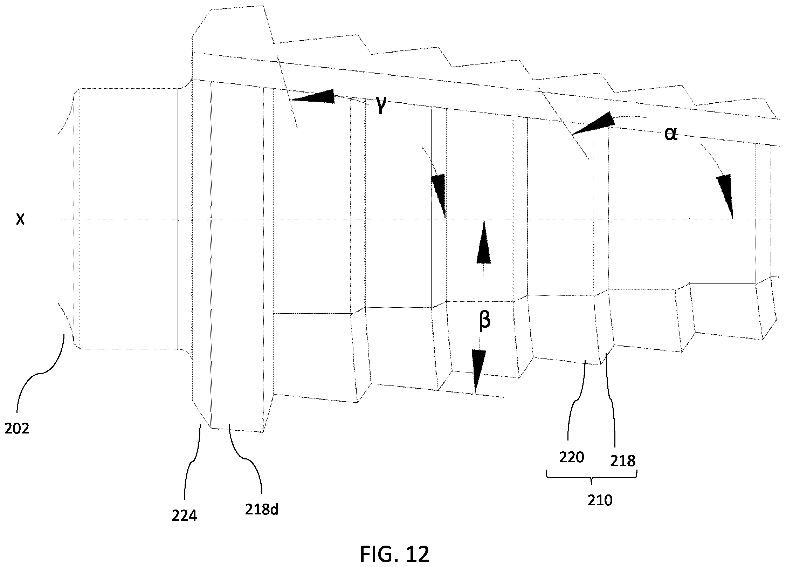

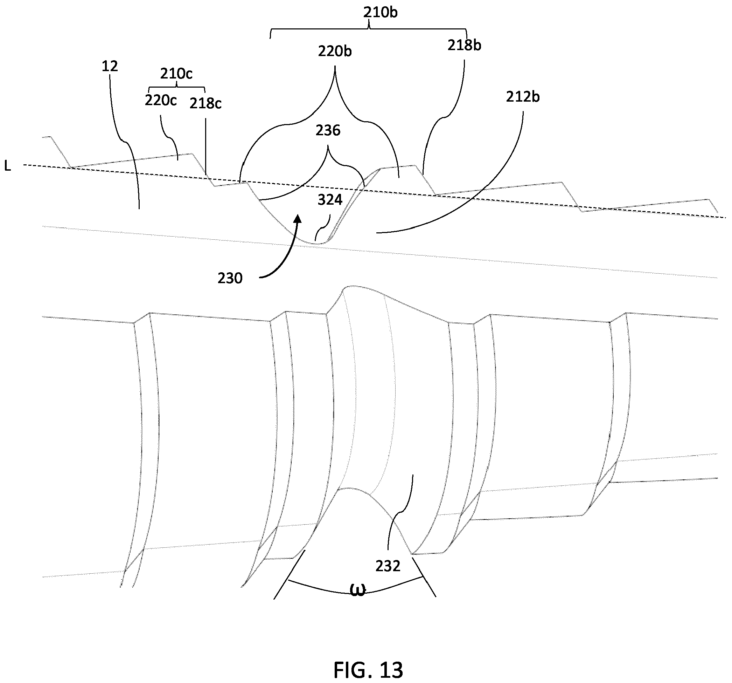

Referring to FIGS. 8-13, another embodiment of a step drill bit 200 includes a shaft or shank 202 that is configured to be connected to a tool holder (e.g., a chuck or quick release tool bit holder) of a rotary power tool, such as a drill, a drill/driver, or an impact driver. The shank 202 may include one or more flat faces 203 that may be received in the tool holder of the rotary power tool. In some embodiments the tool holder of the rotary power tool includes movable jaws that engage the flat faces 203 of the shank 202 such that the step drill bit 200 rotates upon actuation of the rotary power tool. In some embodiments, the shank 202 may comprise a quick connect coupler such as an annular groove 207 that receives a mating protrusion or ball in a quick connect tool holder of a rotary power tool. Other connectors may be provided for connecting the bit to a rotary tool.

A front end of the shank 202 is coupled to a rear end of a cutting portion 205 comprising a step drill configuration. The shank 202 and cutting portion 205 extend generally along a central axis X. In some embodiments, the shank 202 and cutting portion 205 may be formed as one-piece and out of the same material. In other embodiments, the shank 202 and cutting portion 205, or portions of the cutting portion 205 such as the cutting edges and/or cutting tip, may be formed of separate elements, and may be made of different materials connected together to form the bit. The materials may be selected to have different properties where, for example, the cutting portion 205, or portions of the cutting portion 205 such as the cutting edges and/or cutting tip, may be formed of a harder material than the remainder of the bit. The different portions of the bit may be secured together to make a bit where the different portions of the bit are integrally connected together such as by using welding, brazing or the like to permanently secure the components together. In other embodiments, different portions of the bit (such as a cutting edge) may be removably secured such that the different portions of the bit may be disconnected from one another and removed and replaced during normal use of the bit.

In the illustrated embodiment, the cutting portion 205 is formed with a cutting tip 222 and a plurality of steps 210 of progressively increasing diameter from the cutting tip 222 toward the shank 202 (e.g., the drill bit is shown with 13 steps although a greater or fewer number of steps may be used). The cutting tip 222 has a pair of radially extending primary cutting edges 23 that are used to start a hole in a workpiece. The cutting portion 205 also includes one or more flutes 212. Each flute 212 has a J-shape cross-section with a flat portion 212a and a concave curved portion 212b. In other embodiments, the flute may have a parabolic or other concave shape, may be straight or helical, and may be formed by milling.

Each step 210 includes a generally conical tapered portion 218 that flares radially outward at an obtuse first outward angle α (e.g., 135 to 155 degrees) to the axis X and a generally cylindrical portion 220 that extends axially rearward from the tapered portion. The outward taper angles of the tapered portions may be the same or may vary. The cylindrical portions have outer walls that are generally parallel to the axis X, but which may have a small inward taper at a first inward taper angle β to the central axis X, e.g., 0.1 to 3 degrees. Cutting edges 216 and 217 are formed at junctions between the flute 212 and each tapered portion 218 and each cylindrical portion 220, respectively. Most of the cutting is performed by the cutting edge 216 on the tapered portion 218, although some cutting may also be performed by the cutting edge 217 on the cylindrical portion 220. In use, as the tapered portion 218 of each step 210 enters the workpiece, a progressively larger hole is formed in the workpiece. The steps may have the same or similar axial lengths or may have different axial lengths.

The cutting head portion 205 further includes a depth stop in the form of a radial flange 224 extending radially outward from the rearmost step 210a, adjacent the shank 202. The flange includes a generally conical tapered portion 218d that flares radially outward at second outward taper angle γ (e.g., 110 to 130 degrees) to the axis X, the angle γ being smaller than the first outward taper angle α. A radius R may be formed at an intersection of the surfaces 220a and 218d of the rearmost step and the depth stop flange respectively. The radius R may be approximately 0.1 mm to 2 mm. The depth stop flange 224 has a diameter greater than the diameter of the rearmost step 210a and acts as a hard stop to prevent the step drill bit 200 from breaking through the workpiece when a hole of the largest diameter is formed. The angle on the tapered portion 218d of the depth stop flange 224 prevents the flange 224 from cutting into the workpiece, while acting as a depth stop and reducing marring of the workpiece.

The rearmost step 210a has a tapered portion 218a and a generally cylindrical portion 220a that are approximately the same the tapered portions 218 and generally cylindrical portions 220 on the other steps 210. The generally cylindrical portion 220a has an axial length that is approximately the same as the axial length of the other generally cylindrical portion and is inwardly tapered at a similar angle (e.g., approximately 0.1 to 3 degrees), although the length could be longer and the inward taper angle could be greater, such as in the embodiment of FIGS. 1-6. The inward taper on the generally cylindrical portion 210a inhibits the step drill bit from getting stuck in a hole and increases the life and durability of the step drill bit.

The cutting head portion 205 further includes at least one deburring recess 230 formed within the cylindrical portion 220b of one of the intermediate steps 210b. Alternatively, the deburring recess could be formed between adjacent steps 210 (e.g., between a cylindrical portion of one step and a tapered portion of the following step). The deburring recess 230 is configured to be usable to remove burrs from a hole that has been drilled by the step drill bit. The deburring recess 230 has one or more walls 32 forming a C-shaped or V-shaped cross-section that extends at least partially around the periphery of the cutting head portion 5. The deburring recess 230 may have a sharp deburring edge 234 formed at a junction between the walls 232 and the J-shaped portion 212b of the flute 212 where they intersect. In other embodiments, the deburring edge 234 may be less sharp, blunter, or removed to form a generally cylindrical section, which may improve deburring control and reduce kicking caused by the edges. The wall edges 236 are formed at a junction between the walls 32 and the J-shaped portion 12b of the flute 212 where they intersect. The wall edges 236 are configured at an angle ω (e.g., 30 to 80 degrees) to be used to remove burrs from a hole drilled by the step drill bit while not increasing the diameter of the hole that has been drilled. The deburring recess 230 is advantageously formed on one of the smaller diameter steps 210 so that it can be used on most diameters of holes commonly formed using the step drill bit.

The cutting head 200 of FIGS. 8-13 may be used to remove burrs from a hole in a workpiece in a similar manner to how the cutting head 100 is used to remove burrs from a hole, as illustrated in FIGS. 7A-7E.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications may be made to the exemplary implementations described above. These and other implementations are within the scope of this application.

## Claims

1. A step drill bit comprising:
a shank portion configured to be coupled to a power tool and extending along an axis;
a cutting head portion extending along the axis and including
a rear end coupled to the shank portion,
a front cutting tip,
a plurality of steps of progressively increasing diameter from the cutting head to the rear end portion, each step including a conical tapered portion that flares radially outward from the axis at a first outward angle relative to the axis and a generally cylindrical portion that extends axially rearward from the tapered portion, the steps configured to form a plurality of different diameter holes in a workpiece,
a flute that extends through the series of steps generally parallel to or helically relative to the axis,
primary cutting edges formed at junctions between each tapered portion and the flute,
secondary cutting edges formed at junctions between each generally cylindrical portion and the flute,
a depth stop flange extending radially outward from a rearmost step of the plurality of steps, the flange having a diameter greater than the diameter of the cylindrical portion of the rearmost step, and
a deburring recess disposed within or between one of the steps, the deburring recess including a deburring edge at junction between the deburring recess and the flute configured to remove burrs from an edge of a hole that has been formed by the plurality of steps.

2. The step drill bit of claim 1, wherein the rearmost step includes an inwardly tapered portion is inwardly tapered from the cylindrical portion of the rearmost portion at a first inward angle relative to the axis.

3. The step drill bit of claim 2, wherein the first inward angle is approximately 5 degrees to 15 degrees.

4. The step drill bit of any preceding claim, wherein the depth stop flange includes a conical tapered portion that flares radially outward from the axis at a second outward angle relative to the axis, the second outward angle γ being smaller than the first outward angle.

5. The step drill bit of any preceding claim, wherein the deburring recess is C-shaped or V-shaped.

6. The step drill bit of any preceding claim, wherein the deburring edge includes a wall edge at an angle that is configured to remove the burrs from the edge of the hole.

7. The step drill bit of any preceding claim, wherein the deburring recess is within the cylindrical portion of one of the steps.

8. The step drill bit of claim 7, wherein the one of the steps with the deburring recess has an axial length that is greater than an axial length of each of the other plurality of steps.

9. A step drill bit comprising:
a shank portion configured to be coupled to a power tool and extending along an axis;
a cutting head portion extending along the axis and including
a rear end coupled to the shank portion,
a front cutting tip,
a plurality of steps of progressively increasing diameter from the cutting head to the rear end portion, each step including a conical tapered portion that flares radially outward from the axis at a first outward angle relative to the axis and a generally cylindrical portion that extends axially rearward from the tapered portion, the steps configured to form a plurality of different diameter holes in a workpiece,
a flute that extends through the series of steps generally parallel to or helically relative to the axis,
primary cutting edges formed at junctions between each tapered portion and the flute,
secondary cutting edges formed at junctions between each generally cylindrical portion and the flute, and
a depth stop flange extending radially outward from a rearmost step of the plurality of steps, the flange having a diameter greater than the diameter of the cylindrical portion of the rearmost step,
wherein the generally cylindrical portion of the rearmost step includes an inwardly tapered portion that is inwardly tapered a first inward taper angle relative to the axis.

10. The step drill bit of any preceding claim, wherein the rearmost step has an axial length that is greater than an axial length of each of the other plurality of steps.

11. The step drill bit of any of claims 2, 3 and 10, wherein the cylindrical portions of the other plurality of steps are tapered inward at a second angle relative to the axis that is less than the first angle.

12. The step drill bit of claim 11, wherein the first angle is approximately 5 degrees to 15 degrees and the second angle is approximately 0.1 to 3 degrees.

13. A step drill bit comprising:
a shank portion configured to be coupled to a power tool and extending along an axis;
a cutting head portion extending along the axis and including
a rear end coupled to the shank portion,
a front cutting tip,
a plurality of steps of progressively increasing diameter from the cutting head to the rear end portion, each step including a conical tapered portion that flares radially outward from the axis at a first outward angle relative to the axis and a generally cylindrical portion that extends axially rearward from the tapered portion, the steps configured to form a plurality of different diameter holes in a workpiece,
a flute that extends through the series of steps generally parallel to or helically relative to the axis,
primary cutting edges formed at junctions between each tapered portion and the flute,
secondary cutting edges formed at junctions between each generally cylindrical portion and the flute, and
a depth stop flange extending radially outward from a rearmost step of the plurality of steps, the flange having a diameter greater than the diameter of the cylindrical portion of the rearmost step,
wherein the depth stop flange includes a conical tapered portion that flares radially outward from the axis at a second outward angle relative to the axis, the second outward angle being smaller than the first outward angle.

14. The step drill bit of claim 4 or 13, wherein the first outward angle is approximately 135 to 155 degrees and the second outward angle is approximately 110 to 130 degrees to inhibit cutting and marring of a workpiece by the depth stop flange.

15. The step drill bit of claim 9 or 13, further comprising a deburring recess disposed within or between one of the steps, the deburring recess including a deburring edge at junction between the deburring recess and the flute configured to remove burrs from an edge of a hole that has been formed by the plurality of steps.
